(19) Europäisches Patentamt
European Patent Office
Office européen des brevets

(11) **EP 4 120 103 A1**

(12) **EUROPEAN PATENT APPLICATION**

(43) Date of publication:
**18.01.2023 Bulletin 2023/03**

(51) International Patent Classification (IPC):
**G06F 17/16** (2006.01)     **G02B 5/00** (2006.01)
**G06N 3/00** (2006.01)

(21) Application number: **21186256.0**

(22) Date of filing: **16.07.2021**

(52) Cooperative Patent Classification (CPC):
**G06F 17/16; G01N 15/0211; G06N 3/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Malvern Panalytical Limited
Malvern, Worcestershire WR14 1XZ (GB)**

(72) Inventors:
• **Marwick, Daniel
  Malvern (GB)**
• **Mazilu, Michael
  St Andrews (GB)**

(74) Representative: **Barker Brettell LLP
100 Hagley Road
Edgbaston
Birmingham B16 8QQ (GB)**

(54) **PARTICLE CHARACTERISATION METHOD AND APPARATUS**

(57) A method of preparing a representative particle size and refractive index database, for use in determining the size and refractive index of one or more particles within a sample (8) is disclosed. A method of determining the size and refractive index of one or more particles contained within a sample (8) is also disclosed. The size and refractive index determination method comprises: obtaining a measured scattering pattern for said particles, the measured scattering pattern comprising a number of data dimensions; reducing, using a processor (14), the number of data dimensions associated with the measured scattering pattern to obtain dimensionally reduced measured data; comparing, using the processor, the dimensionally reduced measured data with a representation of reference scattering patterns, said reference scattering patterns corresponding to particles having a range of known sizes and refractive indices; and selecting, as the size and refractive index of the one or more particles contained within the sample, the known size and refractive index corresponding to the representation of the reference scattering patterns which most closely corresponds to the dimensionally reduced measured data.

Fig. 1

**Description**

TECHNICAL FIELD

The present disclosure relates to a method of preparing a representative particle size and refractive index database, for use in determining the size and refractive index of one or more particles within a sample. The present disclosure also relates to a method of determining the size and refractive index of one or more particles within a sample. The present disclosure also relates to an apparatus configured to determine the size and refractive index of particles.

BACKGROUND

It is known that particles in a sample can be characterised using an apparatus which illuminates the sample and measures the light scattered by the particles using a number of detectors positioned at different angles. The particles of the sample are typically dispersed within a sample cell in a dispersant medium during measuring. The dispersant medium is typically air or water, and may flow through the sample cell during measurement.

The correlation between light scattering and particle characteristics can be described by the well-known Mie solution to Maxwell's equations. Smaller particles tend to scatter more light at larger scattering angles, and larger particles tend to scatter more light at smaller scattering angles. The light scattered at each of a range of angles from the sample can be used to determine, for example, a size distribution of the particles in the sample. Typically this is achieved by performing a numerical inversion of the measured scattering intensity as a function of angle. This usually involves computing the inverse of a scattering matrix which links particle size distributions to scattering intensity distributions.

The scattering matrix depends on the refractive index of the particles, and typically an estimate of the refractive index of the particles contained within the sample will be used to determine the scattering matrix, and which can have both real and imaginary parts. If such an estimate is not available then the inversion algorithm may try a range of particle refractive indices and determine the best match based on a residual measure. However, this is prone to produce inaccurate results, e.g. if the user estimate of the refractive index is inaccurate or the algorithm settles on an erroneous value due to noise. This also requires that the scattering matrix and its inverse be calculated for each estimated value of the particle refractive index which is computationally intensive, especially if the algorithm is configured to try a range of refractive index values, and inherently inaccurate when large non-square matrices are inverted.

It is an object of the present disclosure to overcome or ameliorate one or more of the above mentioned problems.

SUMMARY

According to a first aspect of the present disclosure a method of preparing a representative particle size and refractive index database, for use in determining the size and refractive index of one or more particles contained within a sample, is provided. The method comprises:

obtaining reference scattering patterns for a set of reference particles having a range of known sizes and refractive indices, the reference scattering patterns comprising a number of associated data dimensions;
performing, using a processor, dimensionality reduction to obtain a representation of the reference scattering patterns, the representation having a smaller number of data dimensions than the reference scattering patterns; and
storing the representation in a computer-readable storage medium.

The range of known refractive indices may comprise complex refractive indices, i.e. refractive indices with both real and imaginary components, to account for absorption properties of the particles. Alternatively, the range of known refractive indices may only comprise real refractive indices.

The reference scattering patterns may include simulated (or modelled) scattering patterns and/or measured scattering patterns (for example, measured scattering patterns of particles having a known particle size and refractive index). The simulated reference scattering patterns may be calculated using a numerical scattering model, for example based on Mie scattering. The numerical scattering model may include parameters related to a measurement apparatus on which measured scattering patterns are obtained, such as a number of detectors and/or a wavelength of light used to illuminate the sample.

The number of data dimensions associated with the reference scattering patterns (prior to performing dimensionality reduction) may relate to the number of detectors and/or different wavelengths of light used obtain or simulate the reference scattering patterns. For example, the number of data dimensions associated with each reference scattering pattern may correspond to the number of detection channels (e.g. 62 detection channels / data dimensions) in a light diffraction/scattering measurement apparatus. The representation of the reference scattering patterns (i.e. subsequent to having performed dimensionality reduction), on the other hand, has a smaller number of data dimensions. For example, the number of data dimensions associated with the representation of the reference scattering patterns may be less than or equal to 10, or less than 5, for example 2. In this regard, the dimensionality of the problem may be significantly reduced, and may provide a performance improvement and reduction in memory usage without significantly compromising accuracy.

The step of performing dimensionality reduction may be achieved in a number of ways, such as by performing eigendecomposition of a matrix, singular value decomposition, linear discriminant analysis, matrix factorisation, etc.. Although, it should be appreciated that, other dimensionality reduction techniques may additionally or alternatively be employed. The singular value decomposition may be advantageous when handling a large number of reference scattering patterns, e.g. greater than $10^6$ reference scattering patterns.

The representation of the reference scattering patterns (i.e. the dimensionally reduced depiction of the reference scattering patterns) may include a set of eigenvectors. Principal component analysis may be performed on the eigenvectors to obtain principal components. Principal component analysis need not be performed on the all of the eigenvectors, principal component analysis may only be performed on a subset of the eigenvectors, which are then used to calculate the principal components. For example, eigenvectors having corresponding eigenvalues below a certain threshold may be disregarded. In this manner, the number of data dimensions required to represent the reference scattering patterns can be reduced whilst retaining most of the information. The threshold may be pre-determined, or may be dynamic (e.g. determined with reference to the distribution of the eigenvalues). For example, the n eigenvectors with the highest eigenvalues may be retained, or eigenvectors with eigenvalues above a predetermined percentile may be retained (and the others discarded).

The principal components may also be considered as forming part of the representation of the reference scattering patterns.

The principal component analysis may comprise projecting the reference scattering patterns onto the eigenvectors (or subset of eigenvectors) to obtain the principal components. Reference coefficients associated with the principal components may be subsequently obtained, such as by projecting the reference scattering patterns onto the principal components. The reference coefficients may also be considered as forming part of the representation of the reference scattering patterns.

The number of eigenvectors and the number of coefficients associated with each of the reference scattering patterns may both be smaller than the number of data dimensions associated with the reference scattering patterns. For example, the number of coefficients associated with each of the reference scattering patterns may be less than or equal to 10. This is one such manner in which overall dimensionality reduction may be achieved.

The dimensionality reduction may, for example, be implemented on an artificial neural network.

In one embodiment, obtaining the reference scattering patterns may further comprise removing non-unique features from each of the reference scattering patterns to obtain reference difference scattering patterns. In this manner, the reference difference scattering patterns contain only information corresponding to what is unique about each of the reference scattering patterns. For example, the mean of the reference scattering patterns may be calculated and subtracted therefrom. This transforms the reference scattering patterns from scattered light intensities and leaves only what is unique about each reference scattering pattern.

The reference scattering patterns may be thought of as a covariance matrix, being the combination of a plurality of reference scattering patterns. For example, the number of reference scattering patterns may be at least 20,000. In some embodiments the number of reference scattering patterns may be greater than $10^6$.

According to a second aspect of the disclosure, a method of determining the size and refractive index of one or more particles contained within a sample is provided. The method comprises:

obtaining a measured scattering pattern for said particles, the measured scattering pattern corresponding to a number of data dimensions;
reducing, using a processor, the number of data dimensions associated with the measured scattering pattern to obtain dimensionally reduced measured data;
comparing, using the processor, the dimensionally reduced measured data with a representation of reference scattering patterns, said reference scattering patterns corresponding to particles having a range of known sizes and refractive indices; and
selecting, as the size and refractive index of the one or more particles contained within the sample, the known size and refractive index corresponding to the representation of the reference scattering pattern which most closely corresponds to the dimensionally reduced measured data.

The number of data dimensions associated with the measured scattering pattern (prior to reducing the number of data dimensions associated therewith) may relate to the number of detectors and/or different wavelengths of light used obtain the measured scattering pattern. For example, the number of data dimensions associated with the measured scattering pattern may correspond to the number of detection channels in a light diffraction/scattering measurement apparatus (e.g. 62 detection channels). The dimensionally reduced measured data, on the other hand, (i.e. subsequent to reducing the number of data dimensions associated therewith) has a smaller number of data dimensions. For example, the number of data dimensions associated with dimensionally reduced measured data may be less than or equal to 10, or less than 5, for example 2.

Reducing the number of data dimensions associated with the measured scattering pattern may comprise calculating, using the processor, coefficients associated with the measured scattering pattern. The number of coefficients is smaller than the number of data dimensions associated with the measured scattering pattern. The step of calculating coefficients associated with the measured scattering pattern may comprise projecting the measured scattering pattern onto principal components associated with the representation of reference scattering patterns.

The step of comparing may comprise comparing the coefficients associated with the measured scattering pattern with corresponding reference coefficients associated with the reference scattering patterns. In this regard, selecting as the size and refractive index of the one or more particles contained within the sample, may comprise selecting the known size and refractive index corresponding to the reference scattering pattern which has associated reference coefficients most closely corresponding to the coefficients associated with the measured scattering pattern.

It should be appreciated that the step of selecting, as the size and refractive index of the one or more particles contained within the sample, the known size and refractive index corresponding to the representation of the reference scattering patterns which most closely corresponds to the dimensionally reduced measured data may not require the specific identification of the particle size and refractive index of the particle/s in the sample. The step of selecting may simply comprise identifying the presence of a particle within a specific size and/or refractive index range. This may be useful in light scattering applications that are attempting to detect the presence of particles of a particular size or refractive index, such as in environmental monitoring or control applications. In these cases, it is possible to define a minimum distance between the set of coefficients for a light scattering measurement and the reference coefficients. A measurement within a set of coefficients closer than this minimum distance will indicate the presence of the particle that is the focus of the search. In this regard, identification of the precise particle size and/or refractive index may not be necessary, and simply identifying the presence of a particle within a specific size and/or refractive index range may be sufficient.

The reference scattering patterns may include simulated (or modelled) scattering patterns and/or measured scattering patterns (for example, measured scattering patterns of particles having a known particle size and refractive index). The simulated reference scattering patterns may be calculated using a numerical scattering model, for example based on Mie scattering. The numerical scattering model may include parameters related to a measurement apparatus on which measured scattering patterns are obtained, such as a number of detectors and/or a wavelength of light used to illuminate the sample.

The coefficients associated with the reference scattering patterns may have been determined using principle component analysis of the reference scattering patterns, such as described in the first aspect.

The number of data dimensions associated with the reference scattering patterns (prior to performing dimensionality reduction) may relate to the number of detectors and/or different wavelengths of light used obtain or simulate the reference scattering patterns. For example, the number of data dimensions associated with each reference scattering pattern may correspond to the number of detection channels (e.g. 62 detection channels / data dimensions) in a light diffraction/scattering measurement apparatus. The representation of the reference scattering patterns (i.e. subsequent to having performed dimensionality reduction), on the other hand, has a smaller number of data dimensions. For example, the number of data dimensions associated with the representation of the reference scattering patterns may be less than or equal to 10, or less than 5, for example 2. In this regard, the dimensionality of the problem may be significantly reduced, and may provide a performance improvement and reduction in memory usage without significantly compromising accuracy.

Each of the scattering patterns (reference and/or measured) may comprise a plurality of intensity values, each intensity value corresponding with a different scattering angle and/or a different wavelength of illuminating light. Each detector may receive light scattered at a range of different scattering angles. The scattering angle of a detector may therefore correspond with the mean scattering angle detected by the detector. Each intensity value may correspond with an average intensity measured over time. Each detector may correspond to a detection channel such that the number of detection channels is equal to the number of detectors, or only a subset of the physical detectors may be selected to give an effective number of detection channels.

Advantageously, it is not required to guess or estimate the refractive index of the particles contained within the sample, since the method determines both the size and refractive index of the particles contained within the sample. Known methods, for example using an inversion of a scattering matrix, rely on a user entering an estimate of the particle refractive index. If this estimate is sufficiently inaccurate it can result in an inaccurate determination of the particle size. Such an inaccuracy is less likely to arise using the method according to the second aspect.

Another advantage is that the method according to the second aspect reduces the dimensionality of the problem, which may provide a performance improvement and reduction in memory usage without significantly compromising accuracy. This is achieved, in one embodiment, because the number of coefficients associated with the dimensionally reduced measured data is smaller than the number of data dimensions (e.g. detection channels) of the measured scattering pattern. For example, the number of data dimensions associated with the measured scattering pattern may correspond to the number of detection channels (e.g. 62 detection channels / data dimensions) but the number of coefficients used in the step of comparing may be less than or equal to 10, or less than 5, for example 2, for the measured and reference scattering patterns.

A further advantage is that the method does not rely on calculating an inverse of a scattering matrix and instead compares the measured and reference scattering patterns more directly, e.g. through their associated coefficients in one embodiment. This overcomes issues which can occur if, for example, the scattering matrix does not have an inverse or the inversion problem is ill-posed. In essence, the method looks for structure in the measured scattering pattern and compares it with structure in the known/reference scattering patterns whilst acknowledging that diminishing returns allows the number of data dimensions to be reduced whilst retaining sufficient information for successful particle size and refractive index determination.

A further advantage is that the method does not repeatedly try different refractive index values requiring a separate inversion each time. This may provide a further performance improvement.

The step of obtaining a measured scattering pattern may comprise performing a measurement on the sample, for example a light diffraction/scattering measurement. Alternatively, it may comprise loading a measured scattering pattern from a computer-readable storage medium, or receiving a measured scattering pattern from a measurement apparatus, for example, over a data communication link.

The step of calculating coefficients associated with the measured scattering pattern may comprise projecting the measured scattering pattern onto principal components associated with the representation of reference scattering patterns. The principal components may have been obtained by a previous dimensionality reduction of the reference scattering patterns, obtention of eigenvectors and principal component analysis thereon to obtain said principal components (such as by obtaining information from the representative particle size and refractive index database disclosed in the first aspect). Alternatively, the method may include dimensionality reduction on the reference scattering patterns, obtention of eigenvectors and principal component analysis to obtain the principal components (such as by preparing a representative particle size and refractive index database as disclosed in the first aspect).

The step of comparing may comprise calculating distances between the coefficients associated with the measured scattering pattern and the corresponding reference coefficients

Various distance metrics may be used, such as the Euclidean distance. For example, if only two coefficients are used to represent the measured scattering pattern and each of the reference scattering patterns then these can each be represented as points in a two-dimensional plane. The distances may then be obtained as the Euclidean distance between the point corresponding to the measured scattering patterns and the points corresponding to the various reference scattering patterns, each of which is the length of the line segment connecting them. A nearest neighbour approach may be used to identify the reference scattering pattern closest to the measured scattering pattern.

The known particle size and refractive index corresponding to the reference scattering pattern may be selected as the particle size and refractive index of the particles contained within the sample, when the coefficients of each scattering pattern are separated by the smallest distance. In this manner the method looks for the smallest Euclidean distance between the coefficients for the measured scattering pattern and the coefficients for each of the reference scattering patterns in the set.

The method may further comprise obtaining the representation of reference scattering patterns from a computer-readable storage medium or from a server computer via a network connection. It should be appreciated that the representation may comprise the principal components and/or coefficients associated with the reference scattering patterns. The representation of reference scattering patterns may include the database prepared in accordance with the method disclosed in the first aspect.

Obtaining the measured scattering pattern may further comprise removing non-unique features from the measured scattering pattern to obtain a measured difference scattering pattern. In this manner, the measured difference scattering pattern contains only information corresponding to what is unique about the measured scattering pattern. For example, the mean of the reference scattering patterns may be calculated and subtracted from the measured scattering pattern. The mean scattering pattern may be derived from the mean of all of the reference scattering patterns. The measured difference scattering pattern may be used to calculate the coefficients associated with the measured scattering pattern, and may thus also be referred to as coefficients associated with the measured difference scattering pattern.

In some embodiments, the step of obtaining a measured scattering pattern may comprise performing a measurement on the sample, optionally a light diffraction measurement, in which the measured scattering pattern comprises a plurality of intensity values, each intensity value corresponding with a different scattering angle and/or a different wavelength of illuminating light.

According to a third aspect of the present disclosure there is provided an apparatus comprising a processor and configured to determine the size and refractive index of particles contained within a sample according to the method of the second aspect.

The apparatus may be further configured to obtain access to a representative particle size and refractive index database, such as one prepared according to the method of the first aspect.

The apparatus may further comprise a sample holder for holding a sample, a light source arranged to generate a beam of light for illuminating the sample and a plurality of detectors arranged to detect scattered light scattered from the particles at different angles to the illuminating light beam for measuring the measured scattered pattern.

According to a fourth aspect of the present disclosure there is provided a machine readable non-transient storage medium comprising instructions for configuring a computer to perform the method according to the first and/or second aspect.

The features (including optional features) of any aspect may be combined with those of any other aspect, as appropriate.

BRIEF DESCRIPTION OF THE DRAWINGS

Example embodiments will be described, by way of example only, with reference to the drawings, in which:

Figure 1 is a schematic representation of a particle characterisation apparatus;

Figures 2A and 2B show the results of particle size and real refractive index determination using simulated data for polystyrene latex particles in water;

Figures 3A and 3B show the results of particle size and complex refractive index determination using simulated data for latex particles;

Figures 4A and 4B show the results of particle size and complex refractive index determination using simulated data for gold particles;

Figures 5A and 5B show the results of particle size and complex refractive index determination using simulated data for silver particles;

Figure 6 shows the results of particle size determination using noisy data;

Figure 7 is a flowchart corresponding to a method of determining the size and refractive index of one or more particles contained within a sample according to the present disclosure; and

Figure 8 is a flowchart corresponding to a method of preparing a representative particle size and refractive index database, for use in determining the size and refractive index of one or more particles contained within a sample according to the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION

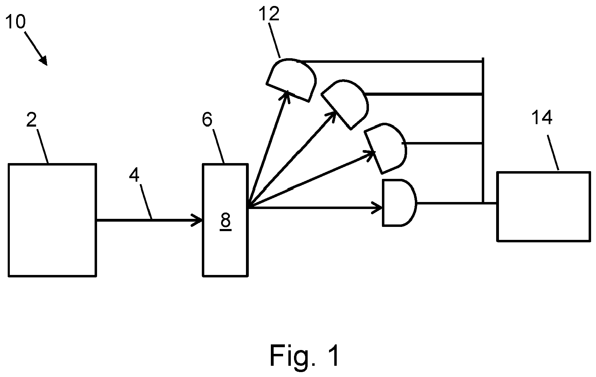

Referring to Figure 1, a schematic representation of an apparatus 10 for particle characterisation is shown. The apparatus may be suitable for determining the size and refractive index of particles contained within a sample 8. The apparatus 10 comprises a light source 2 for producing a beam of light 4 for illuminating a sample holder or sample cell 6. In some embodiments the sample holder may be configured to support a sample droplet, for droplet based analysis. In other embodiments the sample holder may comprise a cuvette or flow cell.

The sample cell 6 contains a sample 8 comprising one or more particles whose size and/or refractive index is to be determined. The apparatus 10 further comprises a plurality of detectors 12 for detecting light scattered at different angles from the sample 8 inside the sample cell 6. The detectors 12 are connected to a processor 14 which processes the detector outputs in order to determine an estimate of the size and/or refractive index of the particles contained within the sample 8. The light source 2 may be a laser, such as a Helium Neon laser, or an LED (e.g. a blue LED). The apparatus 10 may comprise additional components such as mirrors and focussing optics but these are omitted in the schematic representation of Figure 1.

According to an embodiment, the processor 14 of apparatus 10 is configured to determine the size and/or refractive index of particles contained in the sample 8 by analysing the dimensionally reduced data outputs of detectors 12. This dimensionality reduction of the measured sample be achieved using principal component analysis (PCA). In this manner it is not required to perform an inversion of a scattering matrix. Instead, the technique effectively looks for structure in the measured data, and compares it with structure in known reference scattering data (which may also be referred to as calibration scattering data).

In this regard, a representative example of the preparation of a representative particle size and refractive index database (using the reference or calibration scattering patterns), as disclosed in the first aspect, will now be described in more detail. It should be appreciated that this database need not be prepared for each use in the determination of the particle size and refractive index of an unknown sample, and that the previously database may simply be used as a resource in said determination.

A set of reference scattering patterns is provided, e.g. by calculating them based on a model of the apparatus or by measuring them from particles of known characteristics. These reference scattering patterns correspond to a set of particles having a range of known sizes and refractive indices. The set of reference scattering patterns effectively constitutes a scattering matrix $A$ each column of which corresponds to one of the reference scattering patterns. The number of rows in each column corresponds to the number of detectors 12 in apparatus 10, i.e. the number of different measurement outcomes/variables or channels. For example, if the apparatus 10 has a total of 62 detectors (detection channels) then each reference scattering patterns is represented by a vector having length 62. Additionally, the light source 2 of apparatus 10 may be arranged to illuminate the sample 8 with two or more different wavelengths. In this case, the scattering patterns will effectively be formed of two or more concatenated vectors. For example, if both red and blue light is used to illuminate the sample 8 and the apparatus 10 has a total of 62 detectors then each scattering pattern may be represented by a vector having a length of 124. In some embodiments, only a subset of the detectors may be used for each of the different wavelengths. For example, the data from the full set of detectors may be retained from a measurement under red illumination, and the data from some of the detectors may be retained from a measurement under blue illumination (e.g. high angle scattering detectors).

According to one example, the scattering matrix is calculated for 200 particles having sizes logarithmically spaced between 10 nm and 100 $\mu$m. For each of the 200 particle sizes, a range of refractive indices between 1.5 and 2.5 were also considered. As an illustrative example, if only one wavelength is used to illuminate the samples, the apparatus has a total of 62 detectors and a total of $10^4$ particle size and refractive index combinations are considered then the scattering matrix $A$ will be a 62 x $10^4$ matrix.

Once the scattering matrix $A$ has been determined, the mean of all the scattering distributions in the matrix can be also calculated on a per-row basis. The mean for each row of the scattering matrix corresponds to the mean intensity registered by the corresponding detector/channel for all particle sizes and refractive indices in the reference set. By removing the mean for each row, the scattering patterns are transformed from scattered light intensities and leaves only what is unique about each given scattering pattern, resulting in a matrix of difference scattering patterns $D$ each row i of which is given by:

$$D[i] = A[i] - \mu_i \qquad \qquad \text{(Eq. 1)}$$

Where $\mu_i$ is the mean intensity for detector $i$. The difference scattering patterns are used to calculate a covariance matrix, given by:

$$Cov[i,j] = D[i].D[j] \qquad \qquad \text{(Eq. 2)}$$

Where i and j are indexes that correspond to a given scattering pattern in the matrix. It should be appreciated that it is not necessary to remove the mean scattering patterns from each reference pattern, however this is one way in which the dimensionality of the problem is being reduced.

The eigenvectors and eigenvalues of the covariance matrix are calculated. The eigenvectors are the basis on which principal component analysis is conducted and from which the principal components (PCs) are formed. The eigenvalues describe the variance represented by each of the eigenvectors. In general only a subset of the eigenvectors is considered, corresponding to those having the largest eigenvalues, and the eigenvectors having smaller eigenvalues are discarded. Each of the difference scattering patterns is projected onto the eigenvectors to obtain principal components. These principal components are the directions on which there is the most variance in the data. This gives rise to a matrix of principal components $P$ for the reference set which is given by:

$$P[i,j] = x[i].D[j] \qquad \qquad \text{(Eq. 3)}$$

Where $x[i]$ is an eigenvector of the covariance matrix. As mentioned above, it should be appreciated that, in general, only a subset of the eigenvectors is used - corresponding to those having the largest eigenvalues. For example, if the apparatus has 62 detectors then the covariance matrix will be a 62 x 62 matrix and will have 62 eigenvectors and corresponding eigenvalues. However, in accordance with principal component analysis, a subset, e.g. 10, of these eigenvectors may be used to obtain and calculate the matrix of principal components $P$ and thus the index i in equation (3) may only run from 1 to 10, instead of from 1 to 62. The eigenvectors chosen in the subset will in general correspond to those having the largest eigenvalues, i.e. representing the directions in which there is the most variance in the data. This provides a reduction in the dimensionality of the problem whilst still retaining most of the information associated with the scattering patterns. The matrix $P$ represents the principal components with most variation. An advantage of PCA is that it identifies the directions of maximum variance and therefore it is possible to represent the data with fewer dimensions. After the matrix of principal components $P$ has been calculated, each of the difference scattering patterns can then be projected onto the principal components to obtain reference coefficients.

It should be appreciated that the preceding steps, including obtaining reference scattering patterns, eigenvectors, principal components and coefficients may effectively constitute the preparation of a representative particle size and refractive index database, which need not be performed each time an unknown sample is analysed. Similarly, this procedure, including obtaining reference scattering patterns, eigenvectors, principal components and coefficients, may also be thought of as an apparatus calibration procedure which need not be performed each time the apparatus is used to determine particle size and refractive index of an unknown sample. Indeed, the preparation of a representative particle size and refractive index database, or apparatus calibration, may be performed centrally by the manufacturer of the apparatus and an end user apparatus may only be loaded with components, or subsets, of the database or representation of the reference scattering patterns, such as the principal components, a matrix of coefficients corresponding to the projection of the reference scattering patterns onto the principal components, as well as their associated known particle sizes and refractive indices and the mean intensity $\mu_i$. The manufacturer may periodically distribute updates, e.g. on computer readable storage media or via the internet. The end user apparatus need therefore not ever receive or process the full set of reference scattering patterns, which reduces memory and processing overhead in the end user apparatus.

An exemplary method of determining the size and refractive index of one or more particles contained within a sample will now be described in more detail. A scattering pattern for an unknown sample is obtained, e.g. measured using the apparatus 10, resulting in a measured scattering pattern $b$. This measured scattering pattern is also projected onto the same principal components, resulting in a set of coefficients describing the proportion of each principal component in the measured scattering pattern. In some embodiments, the same mean vector $\mu_i$ described above with reference to Eq. 1 is subtracted from the measured scattering pattern prior to projecting it onto the principal components. The coefficients for the measured scattering pattern can then be compared against the set of coefficients obtained for the reference scattering patterns. A distance measure may be evaluated to determine which of the reference scattering patterns is closest to the measured scattering pattern. For example, the Euclidean distance between the measured scattering pattern coefficients and the coefficients obtained for each of the reference scattering patterns may be evaluated. The reference scattering pattern which minimizes this distance is identified and the particle size and refractive index pair to which it corresponds is selected as the determined size and refractive index of the unknown particles in the sample. The method may also be used in light scattering applications that are attempting to detect the presence of particles of a particular size or refractive index, such as in environmental monitoring or control applications. In these cases, it is possible to define a minimum distance between the set of coefficients for a light scattering measurement and the coefficients for the reference matrix. A measurement within a set of coefficients closer than this minimum distance will indicate the presence of the particle that is the focus of the search. In this regard, identification of the precise particle size and/or refractive index may not be necessary, and simply identifying the presence of a particle within a specific size and/or refractive index range may be sufficient. It should also be appreciated that other approaches to determine the closest scattering pattern based on the determined coefficients may be used.

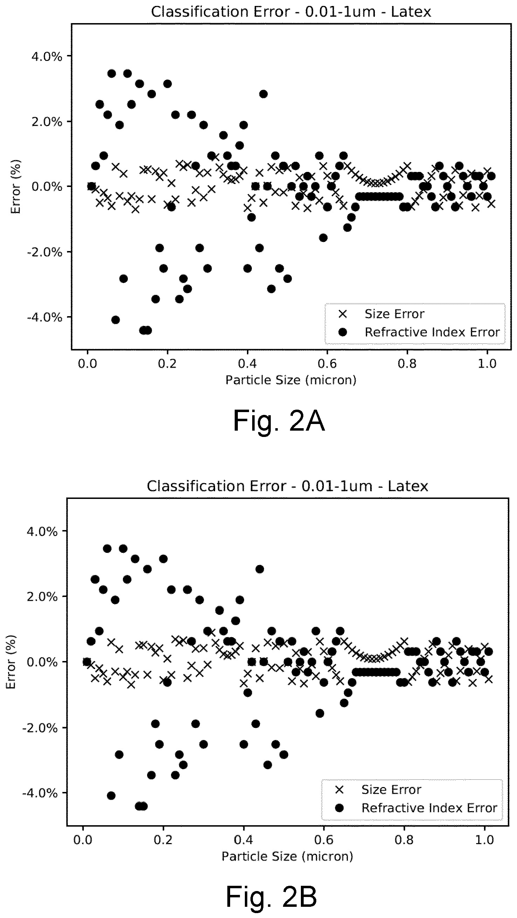

The method was tested using simulated data for polystyrene latex particles in water in order to determine particle size and the real component of the particle refractive index. Two test data sets were used. The first set had particles on the nanometre scale with particle sizes ranging from 10 nm to 1000 nm with 10 nm spacing. Results for the first set are shown in Figure 2A. The second set had particles on the micron scale with particle sizes ranging from 1 $\mu$m to 100 $\mu$m with 1$\mu$m spacing. Results for the second set are shown in Figure 2B. Out of a total of 62 eigenvectors corresponding to 62 detector channels, only 10 eigenvectors having the 10 largest eigenvalues were used in the simulations. The average classification error for the nanometer sized particles was less than 2% for both size and refractive index, which demonstrates that methods according to the present disclosure can accurately classify these particles. For larger particles, there is the same error for the size of the particles. However, there is more variation in the refractive index.

The method was also tested using simulated data for the simultaneous characterisation of particle size, real component of the refractive index and the imaginary component of refractive index, i.e. the full complex refractive index is determined. In this simulation, the scattering matrix contained a total of 1,455,000 reference scattering patterns corresponding to 200 particle sizes logarithmically spaced from 10 nm to 5 $\mu$m; 291 real components of the refractive indices linearly spaced from 0.1 to 3; and 25 complex components of the refractive indices linearly spaced from 0 to 5. Though it should be appreciated that other numbers of reference scattering patterns may be used. Eigendecomposition of the covariance matrix for determining the principal components is sometimes not convenient for a scattering matrix this large due to the amount of data contained within it and associated requirements on memory, although it is still possible if sufficient resources are available. Accordingly, in this example a singular value decomposition of the scattering matrix was used to determine the eigenvectors and, subsequently, the principal components, as an alternative to an eigendecomposition of the covariance matrix. Once the principal components were obtained, they were used to characterize nanometre scale particles.

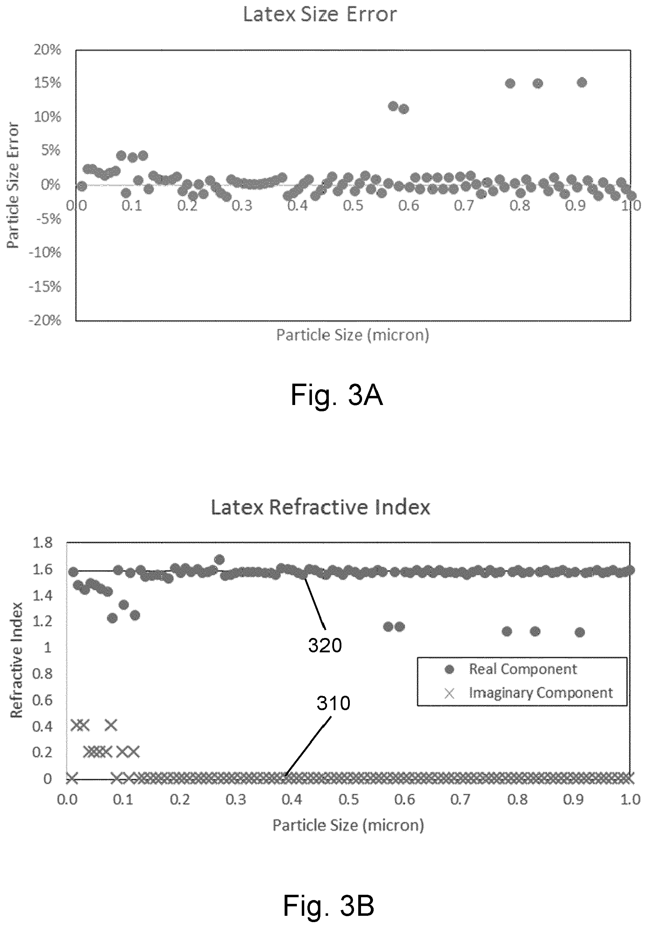

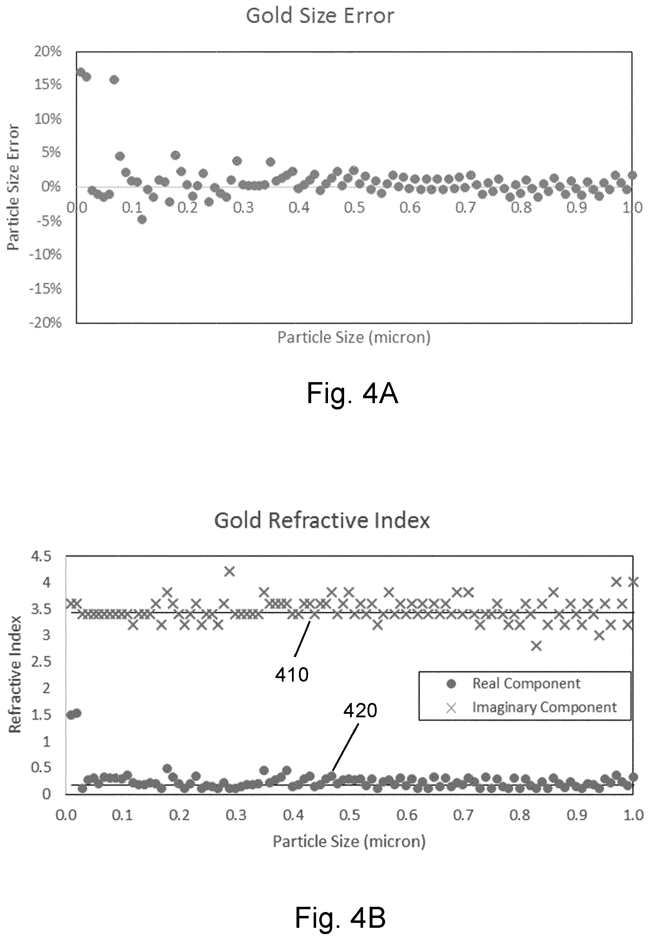

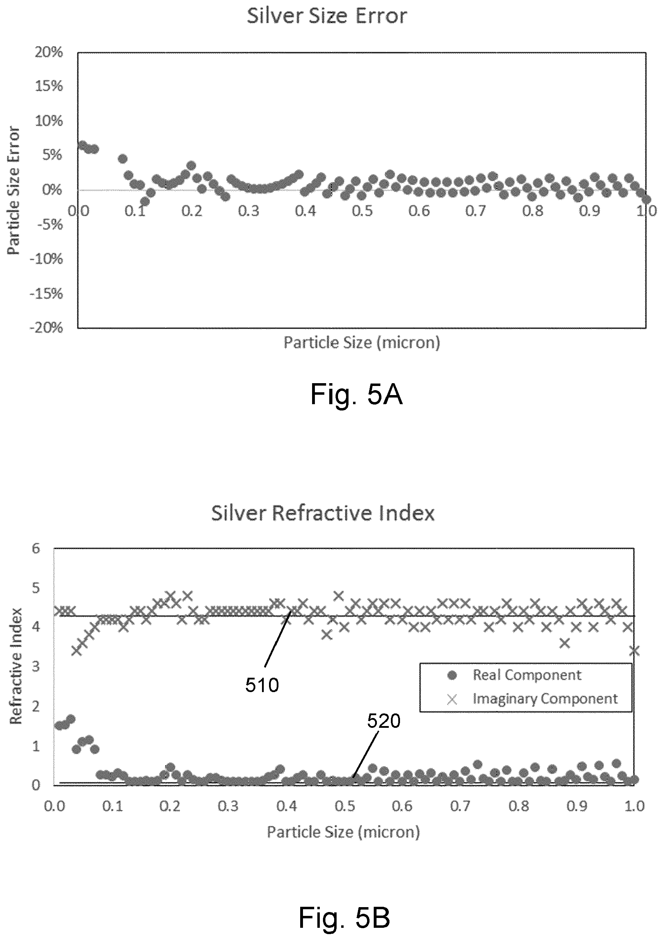

Figures 3A and 3B show the results for characterisation of latex particles having sizes from 10 nm to 1000 nm. Figures 4A and 4B show the results for characterisation of gold particles having the same range of sizes and Figures 5A and 5B show the results for characterisation of silver particles having the same range of sizes. In Figures 3B, 4B and 5B the data labelled 310, 410 and 510 respectively represent the imaginary component of the refractive index whilst the data labelled 320, 420 and 520 respectively represent the real component of the refractive index. These figures demonstrate that, aside from some outliers, the size characterization is accurate. The same is true for the latex refractive index. Errors on the gold and silver refractive index are higher, but the characterization is still acceptably accurate.

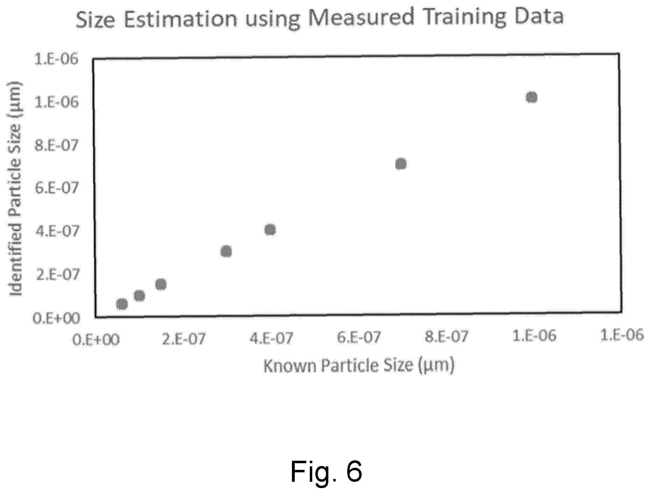

It has been appreciated that real measured scattering patterns may contain noise, whereas the reference patterns forming the scattering matrix are typically pre-calculated rather than measured quantities and may therefore not contain noise. Therefore it is advantageous to account for the noise in the measured data. To this end, a leave-one-out cross-validation was performed to demonstrate the efficacy of the present method with realistic noisy data. A dataset corresponding to latex particle measurements having eight sizes ranging from 60 nm to 9 $\mu$m was obtained. The dataset contained 200 scattering patterns at each particle size. For each scattering pattern, a reference/training matrix was created using all other scattering patterns in the set and the remaining scattering pattern effectively served as the measured scattering pattern corresponding to a particle whose size and refractive index is to be determined. The disclosed method, including principal component analysis, was then performed to identify the percentage of scattering patterns for each particle size in the dataset that were predicted to be in each of the eight size categories. The results are shown in Figure 6 and show that is possible to characterize measured data with the disclosed method.

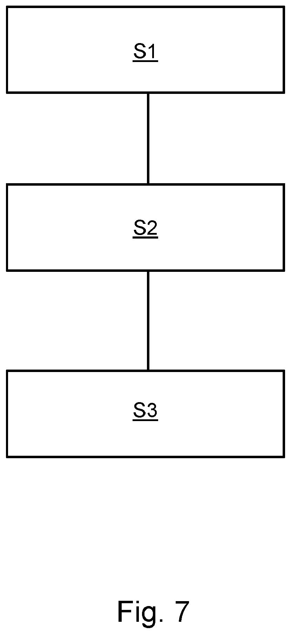

Figure 7 is a flowchart corresponding to a method of determining the size and refractive index of particles contained within a sample according to an embodiment.

Step S1 comprises obtaining a measured scattering pattern for said particles, the measured scattering pattern corresponding to a number of data dimensions (such as detection channels).

Step S2 comprises reducing, using a processor, the number of data dimensions associated with the measured scattering pattern.

Step S3 comprises comparing, using a processor, the dimensionally reduced measured data with a representation of reference scattering patterns, said reference scattering patterns corresponding to particles having a range of known sizes and refractive indices.

Step S4 comprises selecting, as the size and refractive index of the one or more particles contained within the sample, the known size and refractive index corresponding to the representation of the reference scattering patterns which most closely corresponds to the dimensionally reduced measured data.

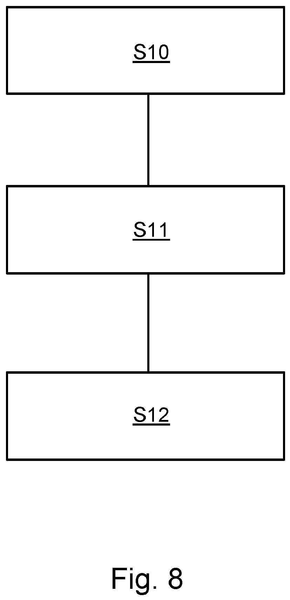

Figure 8 is a flowchart corresponding to a method of preparing a representative particle size and refractive index database, for use in determining the size and refractive index of one or more particles within a sample, according to an embodiment. The database may be accessed by apparatus used for determining the size and refractive index of particles contained within a sample, and may also be thought of as being used in calibrating said apparatus.

Step S10 comprises obtaining reference scattering patterns for a set of particles having a range of known sizes and refractive indices, the reference scattering patterns comprising a number of associated data dimensions. The reference patterns may be simulated, or measured, and may, for example, simulate the scattering patterns which would be obtained using the apparatus (e.g. with the number of data dimensions corresponding to the number of detection channels of the apparatus).

Step S11 comprises performing, using a processor, dimensionality reduction to obtain a representation of the reference scattering patterns, the representation having a smaller number of data dimensions than the reference scattering patterns.

Step S12 comprises storing the representation in a computer-readable storage medium, which can be accessible to a user when determining the size and refractive index of one or more particles within a sample.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality and reference signs in the claims shall not be construed as limiting the scope of the claims.

**Claims**

1. A method of preparing a representative particle size and refractive index database, for use in determining the size and refractive index of one or more particles within a sample, the method comprising:

   obtaining reference scattering patterns for a set of reference particles having a range of known sizes and refractive indices, the reference scattering patterns comprising a number of associated data dimensions;
   performing, using a processor, dimensionality reduction to obtain a representation of the reference scattering patterns, the representation having a smaller number of data dimensions than the reference scattering patterns; and
   storing the representation in a computer readable storage medium.

2. The method according to claim 1, wherein the representation includes a set of eigenvectors.

3. The method according to claim 2, wherein principal component analysis is performed on the eigenvectors to obtain principal components.

4. The method according to claim 3, wherein principal component analysis comprises projecting the reference scattering patterns onto the eigenvectors to obtain the principal components.

5. The method according to claims 3 or 4, wherein reference coefficients associated with the principal components are obtained.

6. The method according to claim 5, wherein the reference coefficients are obtained by projecting the reference scattering patterns onto the principal components.

7. A method of determining the size and refractive index of one or more particles contained within a sample, the method comprising:

   obtaining a measured scattering pattern for said particles, the measured scattering pattern comprising a number of data dimensions;
   reducing, using a processor, the number of data dimensions associated with the measured scattering pattern to obtain dimensionally reduced measured data;
   comparing, using the processor, the dimensionally reduced measured data with a representation of reference scattering patterns, said reference scattering patterns corresponding to particles having a range of known sizes and refractive indices; and
   selecting, as the size and refractive index of the one or more particles contained within the sample, the known size and refractive index corresponding to the representation of the reference scattering patterns which most closely corresponds to the dimensionally reduced measured data.

8. The method according to claim 7, wherein reducing the number of data dimensions associated with the measured scattering pattern to obtain the dimensionally reduced measured data comprises calculating coefficients associated with the measured scattering pattern.

9. The method according to claim 8, wherein the step of calculating coefficients associated with the measured scattering pattern comprises projecting the measured scattering pattern onto principal components associated with the representation of reference scattering patterns.

10. The method according to claim 9, wherein the step of comparing comprises comparing the coefficients associated with the measured scattering pattern with corresponding reference coefficients.

11. The method according to claim 10, wherein the step of comparing comprises calculating distances between the coefficients associated with the measured scattering pattern and the corresponding reference coefficients.

12. The method according to any one of claims 7 to 11, further comprising obtaining the representation of reference scattering patterns from a computer-readable storage medium or from a server computer via a network connection.

13. The method according to any one of claims 7 to 12, wherein the step of obtaining a measured scattering pattern comprises performing a measurement on the sample, optionally a light diffraction measurement, in which the measured scattering pattern comprises a plurality of intensity values, each intensity value corresponding with a different scattering angle and/or a different wavelength of illuminating light.

14. The method according to any one of the preceding claims, wherein obtaining the reference scattering patterns, when dependent on claims 1 to 6, or obtaining the measured scattering pattern, when dependent on claims 7 to 13, further comprises removing non-unique features from the scattering pattern(s) to obtain difference scattering pattern(s).

15. An apparatus comprising a processor and configured to determine the size and refractive index of particles contained within a sample according to the method of any one of claims 7 to 14.

Fig. 1

Fig. 2A

Fig. 2B

## Latex Size Error

Fig. 3A

## Latex Refractive Index

Fig. 3B

## Gold Size Error

Fig. 4A

## Gold Refractive Index

Fig. 4B

## Silver Size Error

Fig. 5A

## Silver Refractive Index

Fig. 5B

Fig. 6

Fig. 7

S10

S11

S12

Fig. 8

Europäisches
Patentamt

European
Patent Office

Office européen
des brevets

# EUROPEAN SEARCH REPORT

Application Number

EP 21 18 6256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERDNIK V V ET AL: "Retrieval of size and refractive index of spherical particles by multiangle light scattering: neural network method application", APPLIED OPTICS, OPTICAL SOCIETY OF AMERICA, WASHINGTON, DC, US, vol. 48, no. 32, 10 November 2009 (2009-11-10), pages 6178-6187, XP001549297, ISSN: 0003-6935, DOI: 10.1364/AO.48.006178 * sections 1 to 3; figure 2 * | 1-15 | INV. G06F17/16 G02B5/00 G06N3/00 |
| X | WO 2017/053592 A1 (UNIV CALIFORNIA [US]) 30 March 2017 (2017-03-30) * paragraphs [0008], [0078] – [0090], [0145] – [0150]; figures 4a, 4b, 5, 6 * | 1-15 | |

TECHNICAL FIELDS
SEARCHED      (IPC)

G06F
G06N
G02B

The present search report has been drawn up for all claims

| Place of search | Date of completion of the search | Examiner |
|---|---|---|
| Berlin | 20 December 2021 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

**EP 21 18 6256**

This annex lists the patent family members relating to the patent documents cited in the above-mentioned European search report.
The members are as contained in the European Patent Office EDP file on
The European Patent Office is in no way liable for these particulars which are merely given for the purpose of information.

**20-12-2021**

| Patent document cited in search report | Publication date | Patent family member(s) | Publication date |
|---|---|---|---|
| WO 2017053592 A1 | 30-03-2017 | US 2018286038 A1<br>WO 2017053592 A1 | 04-10-2018<br>30-03-2017 |

EPO FORM P0459

For more details about this annex : see Official Journal of the European Patent Office, No. 12/82